# EUROPÄISCHE PATENTSCHRIFT

(11) **EP 3 731 247 B1**
(45) Veröffentlichungstag und Bekanntmachung des Hinweises auf die Patenterteilung: **10.11.2021**
(21) Anmeldenummer: 19170835.3
(22) Anmeldetag: 24.04.2019
(51) Int. Cl.: H02G 3/22, H01B 17/26, H01F 27/04

(54) **BAUSATZ FÜR EINE DURCHFÜHRUNGSANORDNUNG ZUR ELEKTRISCHEN ANBINDUNG EINER TRANSFORMATORANLAGE**
KIT FOR A FEEDTHROUGH ASSEMBLY FOR ELECTRICALLY CONNECTING A TRANSFORMER SYSTEM
ENSEMBLE POUR UN DISPOSITIF DE PASSAGE PERMETTANT DE CONNECTER ÉLECTRIQUEMENT UNE INSTALLATION DE TRANSFORMATEUR

(43) Veröffentlichungstag der Anmeldung: 28.10.2020
(73) Patentinhaber: Preis & Co Ges.m.b.H., 2763 Pernitz (AT)
(72) Erfinder: Gezer, Seyfi, 2552 Hirtenberg (AT); Szabo, Roland Zsigmond, 9400 Sopron (HU)
(74) Vertreter: Patentanwaltskanzlei Matschnig & Forsthuber OG

(56) Entgegenhaltungen:
- EP-A1- 1 860 671
- EP-A1- 1 860 672
- EP-A1- 3 159 901
- FR-A1- 2 633 439

## Beschreibung

Die Erfindung betrifft einen Bausatz für eine Durchführungsanordnung zur elektrischen Anbindung einer Transformatoranlage durch eine Öffnung in einer Gehäusewand der Transformatoranlage gemäß Anspruch 1.

Weiters betrifft die Erfindung eine Durchführungsanordnung, die aus einem Bausatz zusammengesetzt ist.

Aus dem Stand der Technik sind diverse Durchführungsanordnungen bekannt geworden. So zeigen beispielsweise die Dokumente EP 1 860 672 A1, EP 1860 671 A1, EP 3 159 901 A1 sowie FR 2 633 439 A1 Durchführungsanordnungen für Transformatoren.

Eine weitere Durchführungsanordnung für Transformatoren geht beispielsweise aus der EP 1 614 127 B1 hervor. Bekannte Durchführungsanordnungen weisen üblicherweise einen elektrischen Leiter auf, der mittels innerhalb der Öffnung einer Gehäusewand der Transformatoranlage angeordneten Isolierelementen von dem Außenbereich des Transformators hin zu dem Innenbereich des Transformators geführt wird. Das Gehäuse der Transformatoranlage weist dabei Erdpotential auf, der Leiter hingegen kann mit einer Spannung bis oder über 1kV beaufschlagt werden und muss durch die Anordnung der Isolierelemente deshalb ausreichend von der Gehäusewand isoliert werden. Bei der Montage solcher Durchführungsanordnungen war es bisher erforderlich, die Durchführungsanordnung vom Inneren der Transformatoranlage ausgehend gegen ein Herausnehmen der Durchführungsanordnung zu sichern, indem entsprechende Isolierelemente oder Abstützmittel von innen gegen die Gehäusewand abgestützt, insbesondere verschraubt wurden, wobei hierfür der Innenbereich der Transformatoranlage bzw. die Unterseite des Trafodeckels zugänglich gemacht werden musste. Die Montage der Durchführungsanordnungen gemäß dem Stand der Technik ist dadurch zeitaufwändig und setzte bisher den Zugang in das Innere der Transformatoranlage voraus.

Eine Weiterentwicklung demgegenüber stellt die Durchführungsanordnung WO 2018/219637 A1 dar, bei der es möglich ist, die Durchführung von außen in eine Öffnung einer Gehäusewand einzuführen und durch im Inneren der Gehäusewand einrastende Klemmelemente gegen ein Herausnehmen zu sichern. Das Einrasten der Klemmelemente wird dabei durch Festspannen des Leiters bewirkt. Hierzu weist der Leiter eine innenliegende Verbreiterung auf, die an dem Isolator abstützt und damit den Leiter gegen ein Herausziehen sichert. Das Festspannen des Leiters erfolgt dann über eine an dem Leiter angreifende außenliegende Schraube, die sich an einem außenliegenden Isolator abstützt, wobei der Leiter durch Festspannen der Schraube gegen den Isolator festgespannt wird und damit die innenliegenden Klemmelemente fixiert.

Diese Anordnung besteht aus einer Mehrzahl an Isolierelementen, die aufwendig gefertigt und ineinander gefügt werde müssen. Außerdem macht sie eine Anpassung herkömmlicher Leiter erforderlich, indem diese einen verbreiterten Abschnitt und einen Gewindeabschnitt aufweisen müssen, um in besagter Weise ein Festspannen ermöglichen zu können. Das Vorsehen des Gewindeabschnittes setzt eine zylindrisch runde Form des Leiters voraus, wohingegen der verbreiterte Abschnitt eine Abweichung von dieser Form erfordert. Die Herstellung solcher Leiter stellt einen gewissen Aufwand dar und muss unter Umständen an individuelle Anforderungen unterschiedlicher Durchführungsanlagen angepasst werden.

Eine Aufgabe der Erfindung besteht daher darin, einen Bausatz für eine Durchführungsanordnung der eingangs genannten Art zu schaffen, mit dem eine vereinfachte Herstellung und Montage möglich ist.

Diese Aufgabe wird mit einer Durchführungsanordnung der eingangs genannten Art gelöst, bei der erfindungsgemäß die kennzeichnenden Merkmale von Anspruch 1 vorgesehen sind. Auf diese Weise kann mittels dem Bausatz eine Durchführungsanordnung an einem Transformator befestigt werden, die von außen in eine Öffnung der Gehäusewand des Transformators eingesetzt und montiert werden kann, ohne für die Herstellung der Klemmwirkung den Leiter mechanisch zu beanspruchen. Dadurch ist es möglich herkömmliche Flachleiter oder anders gestaltete Leiter zu verwenden und auf Adaptierungen der Leiter zur Herstellung einer Klemmwirkung zu verzichten. Die Durchführungsanordnung kann für Gehäusewände unterschiedlicher Dicke eingesetzt werden und setzt bei der Montage nur voraus, dass die Öffnung in der Gehäusewand passend zur Durchführungsanordnung gewählt ist, oder umgekehrt. Natürlich kann vorgesehen sein, dass die Verschiebung des Klemmelements gemeinsam mit der Klemmhaltevorrichtung erfolgen kann. Auch kann der Bausatz die Stellschraube umfassen.

Der Ausdruck "Umfang des zumindest einen ersten Isolierelements" ist so zu verstehen, dass dieser ohne den zumindest einen ersten Klemmelement gebildet wird. Es wird dabei also die Form der Klemmelemente selbst nicht dem Umfang des Isolierelements zugerechnet. Durch Festziehen der Stellschraube, die im ebenso einen Bestandteil des Bausatzes ausbilden kann, wird die Durchführungsanordnung in seiner Position fixiert. Das zumindest eine Klemmelement verhindert dabei ein Herausrutschen der Durchführungsanordnung. Dadurch ist es möglich, die Durchführungsanordnung von außen rasch zu montieren, ohne dabei einen Zugang für Montagewerkzeuge in den Innenbereich der Transformatoranlage zu benötigen. Auch kann vorgesehen sein, dass zur Lösung einer bereits hergestellten Klemmverbindung die Stellschraube gelöst wird und die Klemmelemente mittels eines Hilfswerkzeuges in eine an den Umfang herangerückte Position gebracht werden, sodass die Durchführungsanordnung von außen wieder von der Gehäusewand gelöst und entfernt werden kann. Die Spannung, die durch die Durchführungsanordnung in den Transformator eingeleitet bzw. von diesem ausgeleitet wird, beträgt beispielsweise 1 bis 3kV. Die Ströme, die durch die Durchführungsanordnung zu- oder abgeleitet werden können, betragen beispielsweise 1250 A. Im Falle eines Drehstromsystems kann jeder Phase eine Durchführungsanordnung zugeordnet werden. Die Öffnungen in der Gehäusewand einer Transformatoranlage sind typischerweise für bestimmte Durchführungsanordnungen angepasst bzw. umgekehrt. Die Durchführungsanordnung kann daher für die jeweilige Anwendung bzw. Gehäuseöffnung entsprechend dimensioniert sein. Die Öffnung zur Aufnahme der Stellschraube ist von der Öffnung zur Aufnahme des Leiters getrennt.

Insbesondere kann vorgesehen sein, dass der Bausatz den länglich ausgebildeten elektrischen Leiter umfasst, wobei entlang der Längserstreckung des Leiters zumindest ein im montierten Zustand in Bezug auf die Gehäusewand innenliegender erster Abschnitt sowie ein im montierten Zustand in Bezug auf die Gehäusewand außenliegender zweiter Abschnitt ausgebildet ist. Dabei kann vorgesehen sein, dass der Leiter als Flachleiter ausgebildet ist. Vorzugsweise kann vorgesehen sein, dass der Leiter Öffnungen aufweist, in die Fixierelemente, insbesondere Bolzen, eingesetzt sind, mit denen die Position des Leiters in Bezug auf das erste Isolierelement fixiert ist.

Insbesondere kann vorgesehen sein, dass das erste Isolierelement aus einem ausgehärteten Epoxidharzmaterial besteht. Die Hauptvorteile von Epoxidharz in diesem Anwendungsfeld sind: Witterungsbeständigkeit, UV Beständigkeit, Isoliereigenschaft, relativ glatte Oberflächen sind bei der Herstellung realisierbar - somit geringe Haftung von Schmutzpartikeln. Die Verwendung Epoxidharzmaterial ist daher für freistehende Trafos, die der Witterung ausgesetzt sind, vorteilhaft. Wenn der Trafo z.B. hingegen vor Witterung geschützt in einem Trafohaus steht, kann auch z.B. Polyamid 6 oder Polyamid 6.6 jeweils Glasfaserverstärkt (z.B. ca. 30%) verwendet werden. Polyamid hat sehr gute Isoliereigenschaften. Im Verbund mit Glasfasern wird diese Isoliereigenschaft noch zusätzlich verbessert.

Zur Abdichtung der Verbindung des ersten Isolierelements mit der Gehäusewand kann vorgesehen sein, dass zwischen dem ersten Isolierelement und der Außenseite der Gehäusewand ein inneres Dichtungselement zur Umschließung eines aufgenommenen Leiters angeordnet ist. Die Anordnung unterhalb des Isolierelements schützt den Dichtungsring vor Witterungseinflüssen, insbesondere vor UV-Strahlung, und damit bedingter Alterung. Vorzugsweise ist dabei vorgesehen, dass das innere Dichtungselement als Dichtungsring ausgebildet ist, wobei das erste Isolierelement eine Nut zur Umschließung eines aufgenommenen Leiters aufweist, innerhalb der das innere Dichtungselement teilweise aufnehmbar ist, wobei die Nut entlang ihrer Längserstreckung zur Klemmung des inneren Dichtungselements wellenförmig ausgebildet ist. Auf diese Weise kann sichergestellt werden, dass das innere Dichtungselement klemmend an dem ersten Isolierelement gehalten ist, wodurch eine einfache Vormontage des inneren Dichtungselements erfolgen und ein späteres unbeabsichtigtes Lösen des Dichtungselements verhindert werden kann.

Zur Abdichtung des Übergangs zwischen dem Leiter und dem ersten Isolierelement kann vorgesehen sein, dass an einer Außenseite des ersten Isolierelements, die im montierten Zustand von der Außenseite der Gehäusewand absteht, ein zweites Isolierelement angeordnet ist, wobei das zweite Isolierelement eine Öffnung zur formschlüssigen Aufnahme des Leiters aufweist, wobei zwischen den beiden Isolierelementen ein äußerer Dichtungsring zum formschlüssigen Umschließen eines aufgenommenen Leiters angeordnet ist, wobei das zweite Isolierelement mit dem ersten Isolierelement über eine Schraubverbindung an dem ersten Isolierelement fixierbar ist und der zwischenliegende äußere Dichtungsring zwischen den Isolierelementen und dem Leiter zur Abdichtung der Öffnung des ersten Isolierelements klemmbar ist.

Insbesondere kann vorgesehen sein, dass der Bausatz genau zwei Isolierelemente aufweist, anhand derer der Leiter führbar ist, nämlich das erste Isolierelement und das zweite Isolierelement.

Vorzugsweise kann vorgesehen sein, dass zumindest zwei, drei, vier oder mehr Klemmelemente an dem zumindest einen ersten Isolierelement angeordnet sind, wobei die Klemmelemente vorzugsweise gleichmäßig entlang des Umfangs des ersten Isolierelements, bevorzugt auf gleicher Höhe, angeordnet sind.

Insbesondere kann vorgesehen sein, dass das zumindest eine erste Isolierelement eine sich zur Außenseite des Isolierelements erstreckende korrespondierende Öffnung zur Aufnahme der Schraube aufweist, wobei in dieser Öffnung eine Dichtung angeordnet ist, mit der die Schraubverbindung wasserdicht abdichtbar ist.

Vorzugsweise kann vorgesehen sein, dass das zumindest eine Klemmelement federnd an dem zumindest einen ersten Isolierelement angeordnet ist, wobei die Federkraft dergestalt gewählt ist, dass das Klemmelement durch die Federkraft von der zweiten Position in die erste Position gedrückt wird, wobei das zumindest eine Klemmelement dergestalt angeordnet ist, dass es durch Einwirken einer Kraftkomponente, die in Richtung der Durchführungsöffnung des zumindest einen ersten Isolierelements wirkt, in die zweite Position wechseln kann, wobei das zumindest eine Klemmelement in der zweiten Position an die Umfangsfläche des zumindest einen ersten Isolierelements herangerückt ist, insbesondere darin aufgenommen ist, und wobei die Durchführungsöffnung des zumindest einen ersten Isolierelements vorzugsweise zur formschlüssigen Aufnahme eines durch das erste Isolierelement erstreckenden Abschnitts des elektrischen Leiters ausgebildet ist.

Insbesondere kann vorgesehen sein, dass jedes Klemmelement in je einer Klemmelementhaltevorrichtung gehalten ist, wobei jede Klemmelementhaltevorrichtung an dem ersten Isolierelement in Längsrichtung des Leiters verschiebbar geführt ist, wobei jede Klemmelementhaltevorrichtung insbesondere aus ausgehärtetem Polyamidmaterial, bevorzugt glasfaserverstärktes Polyamid 6 oder glasfaserverstärktes Polyamid 6.6, besteht, wobei in jeder Klemmelementhaltevorrichtung eine Öffnung zur Aufnahme der jeweiligen Stellschraube vorgesehen ist, in der ein Metallgewinde zum Eingriff in einen Gewindeabschnitts der zugeordneten Stellschraube angeordnet ist. Auf diese Weise kann das Klemmelement getrennt von einer Haltevorrichtung ausgebildet und für den Klemmvorgang optimiert werden. Auch kann das Klemmelement dadurch auf einfache Weise ausgetauscht oder adaptiert werden.

Vorzugsweise kann vorgesehen sein, dass das zumindest eine Klemmelement im Wesentlichen plättchenförmig ausgebildet ist, wobei das zumindest eine erste Isolierelement entlang seines Umfanges jeweils eine Vertiefung zur Aufnahme des jeweiligen Klemmelements oder der Klemmelementhaltevorrichtung aufweist, wobei das zumindest eine Klemmelement eine im montierten Zustand zumindest teilweise in Richtung des zumindest einen Isolierelements abstehende, an dem Isolierelement abstützende Zunge zur Ausbildung einer das Klemmelement in die erste Position drückenden Federkraft aufweist, wobei die Zunge zumindest abschnittsweise verbreitert ist und in eine korrespondierende Führung eingreift, die im Isolierelement ausgebildet ist und die Zunge entlang der Längsachse des Isolierelements führt, wobei das zumindest eine Klemmelement zudem an seiner von dem Umfang des Isolierelements abgewandten, der Zunge gegenüberliegenden Außenseite einen Vorsprung aufweist, durch den eine Klemmfläche zur Klemmung an einer Innenseite der Gehäusewand der Transformatoranlage ausgebildet ist. Auf diese Weise kann eine effektive Klemmung der Durchführungsanordnung sichergestellt werden. Gleichzeitig wird durch die Führung der Zungen der Klemmelemente vermieden, dass diese sich von dem ersten Isolationselement unbeabsichtigt lösen können.

Die Erfindung betrifft ebenso eine Durchführungsanordnung zusammengesetzt aus einem erfindungsgemäßen Bausatz.

Die Erfindung ist im Folgenden anhand einer beispielhaften und nicht einschränkenden Ausführungsform näher erläutert, die in den Figuren veranschaulicht ist. Darin zeigen
Figuren 1a bis 1d eine schematische Darstellung eines Montagevorganges einer Durchführungsanordnung gemäß einer Ausführungsform eines erfindungsgemäßen Bausatzes,
Figur 2 eine teilweise Schnittdarstellung einer Durchführungsanordnung gemäß Fig. 1a bis Fig. 1d,
Figur 3 eine Schnittdarstellung der Durchführungsanordnung gemäß Fig. 2, die gemäß der Schnittlinie B-B nach Fig. 2 um 90° um ihre Längsachse gedreht wurde,
Figur 4 eine Schnittdarstellung der Durchführungsanordnung gemäß der Schnittlinie C-C der Fig. 3,
Figur 5 eine Explosionsdarstellung der Durchführungsanordnung gemäß den Figuren 1 bis 4,
Figur 6 eine perspektivische Darstellung einer Außenseite der Durchführungsanordnung gemäß den Figuren 1 bis 5 im montierten Zustand,
Figur 7 ein Klemmelement und eine zugehörige Klemmelementhaltevorrichtung gemäß Detail A der Fig. 2,
Figur 8 eine Draufsicht auf das Klemmelement und die Klemmvorrichtung gemäß Figur 7,
Fig. 9a das Klemmelement und das zugehörige Klemmelementhaltevorrichtung während eines Montagevorganges im eingeklappten Zustand,
Fig. 9b das Klemmelement und das zugehörige Klemmelementhaltevorrichtung gemäß Detail A der Fig. 2 im ausgeklappten montierten Zustand,
und Fig. 10 eine Vorderansicht des Klemmelements.

In den folgenden Figuren bezeichnen - sofern nicht anders angegeben - gleiche Bezugszeichen gleiche Merkmale.

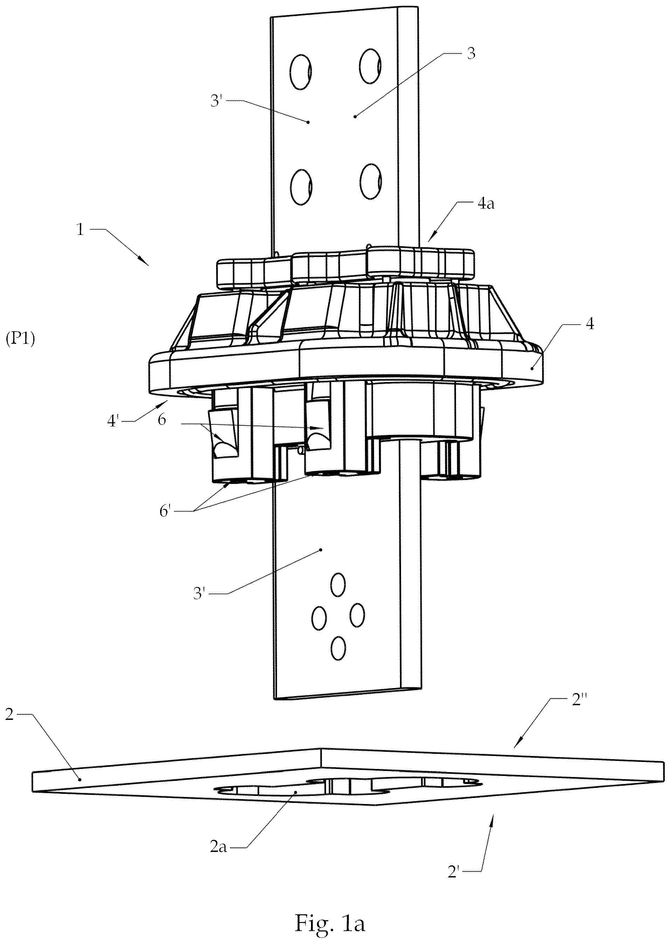

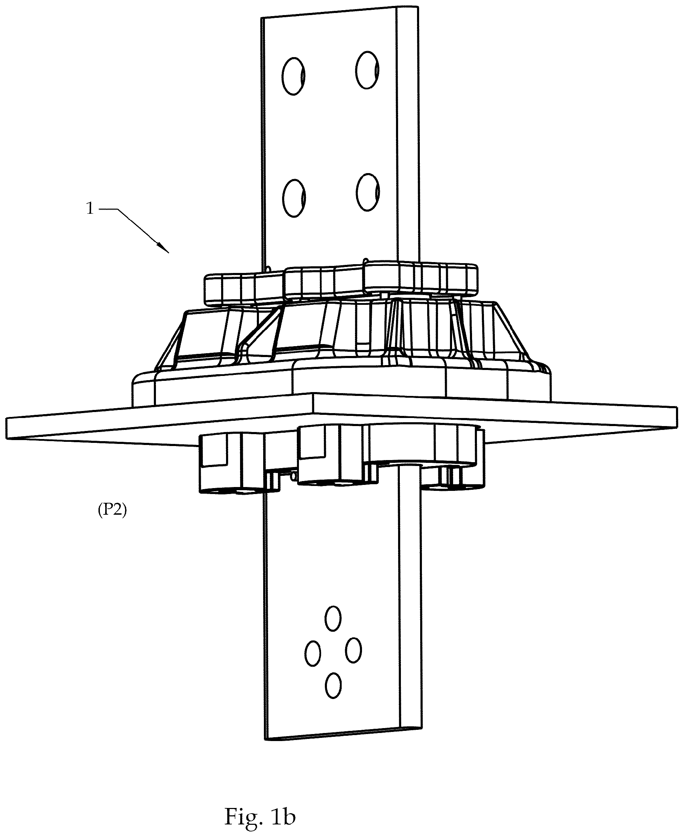

Die Figuren 1a bis 1d zeigen eine schematische Darstellung eines Montagevorganges einer Durchführungsanordnung gemäß einer Ausführungsform eines erfindungsgemäßen Bausatzes 1. Zur besseren Übersicht wurden die Bezugszeichen in Figuren 1b bis 1d weitgehend weggelassen.

Der Bausatz 1 ist dazu eingerichtet, eine Durchführungsanordnung zur elektrischen Anbindung einer Transformatoranlage durch eine Öffnung 2a in einer Gehäusewand 2 der Transformatoranlage herzustellen. Hierzu umfasst der Bausatz 1 in der gezeigten Ausführungsform einen länglich ausgebildeten elektrischen Leiter 3. Entlang der Längserstreckung des Leiters 3 ist im montierten Zustand ein in Bezug auf die Gehäusewand 2 innenliegender erster Abschnitt 3' sowie außenliegender zweiter Abschnitt 3" ausgebildet.

Der Bausatz 1 umfasst weiters zumindest ein in die Öffnung 2a der Gehäusewand 2 einsetzbares erstes Isolierelement 4, das eine Durchführungsöffnung 4a zur Aufnahme des Leiters 3 aufweist. Die Durchführungsöffnung 4a des ersten Isolierelements 4 ist zur Führung des Leiters 3 von einer Außenseite 2" der Gehäusewand 2 hin zu einer Innenseite 2' der Gehäusewand 2 eingerichtet und isoliert den Leiter 3 entlang der Führung innerhalb der Durchführungsöffnung 4a gegenüber der Gehäusewand 2. Das Isolierelement 4 weist eine Anschlagsfläche 4' auf, durch die eine Einsetzbewegung des Isolierelement 4 in Richtung der Öffnung 2a der Gehäusewand 2 begrenzt ist, indem im montierten Zustand die Anschlagsfläche 4' auf der Außenseite 2" des Gehäusewand 2 abgestützt ist.

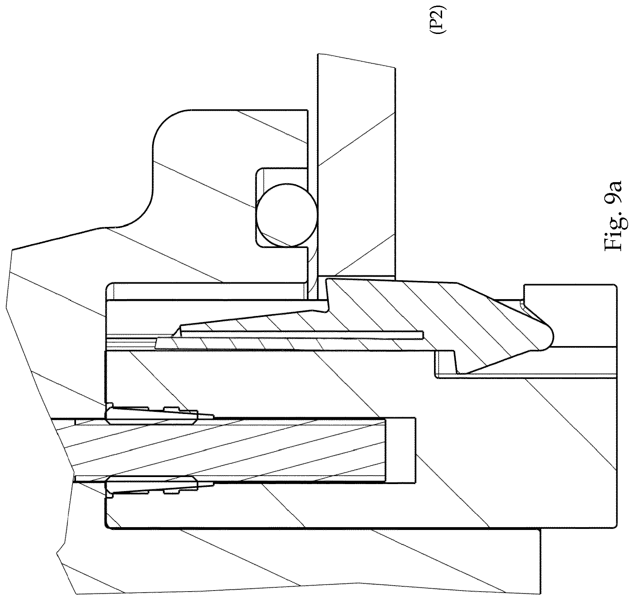

Zusätzlich umfasst der Bausatz 1 in der vorliegenden Ausführungsform vier Klemmelemente 6, die an dem ersten Isolierelement 4 in Längsrichtung des Leiters 3 verschiebbar geführt sind. Jedes Klemmelement 6 ist von einer von dem Umfang des ersten Isolierelements 4 abstehenden ersten Position P1 in eine an den Umfang des ersten Isolierelements 4 herangerückte zweite Position P2 (siehe Figur 1b und Fig. 9a) bringbar. Dabei ist jedes Klemmelement 6 dergestalt an dem ersten Isolierelement 4 angeordnet ist, dass es in der ersten Position P1 im eingebauten Zustand der Durchführungsanordnung eine Verschiebung des ersten Isolierelements 4 in Richtung der Außenseite 2" der Gehäusewand 2 durch Abstützung an der Innenseite 2' der Gehäusewand 2 begrenzt.

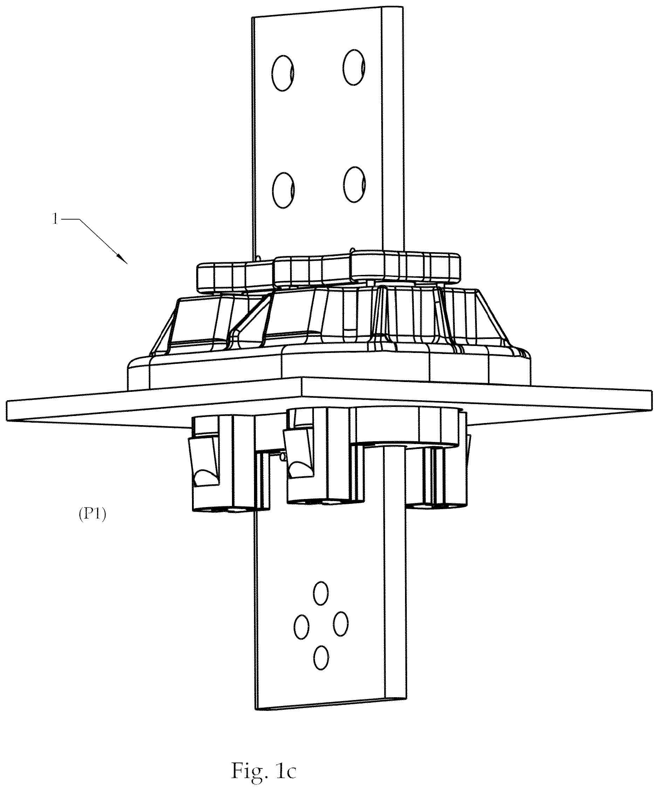

In Figur 1a ist der Bausatz 1 mitsamt seinen bereits vormontierten Komponenten in einer Position oberhalb einer Öffnung 2a der Gehäusewand 2 dargestellt. Die Klemmelemente 6 befinden sich dabei in der Position P1. In Figur 1b ist der Bausatz 1 bereits teilweise in die Öffnung 2a eingesetzt, und zwar in einer Position, in der die Klemmelemente 6 gegen die Begrenzung der Öffnung 2a drücken und in Richtung des ersten Isolierelements 4 in die zweite Position P2 geklappt sind. In Figur 1c sind die Klemmelemente 6 mitsamt dem Bausatz 1 bereits soweit durch die Öffnung 2a geführt worden, dass diese mit ihren Klemmbereichen innenseitig von der Gehäusewand 2 angeordnet sind. Nun können die Klemmelemente 6 in Richtung der Gehäusewand 2 bewegt werden, sodass der Bausatz 1 an der Gehäusewand 2 festgeklemmt wird. Dabei weist das erste Isolierelement 4 einen Außenbereich aufweist, der an der Außenseite 2" der Gehäusewand abgestützt ist und mittels den Klemmelementen 6 gegen die Außenseite 2" der Gehäusewand festgespannt wird.

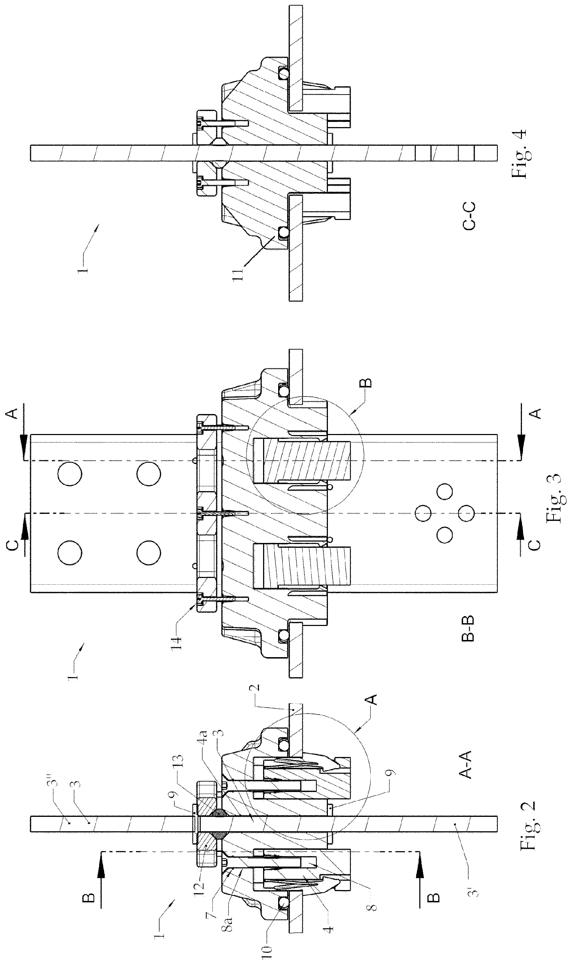

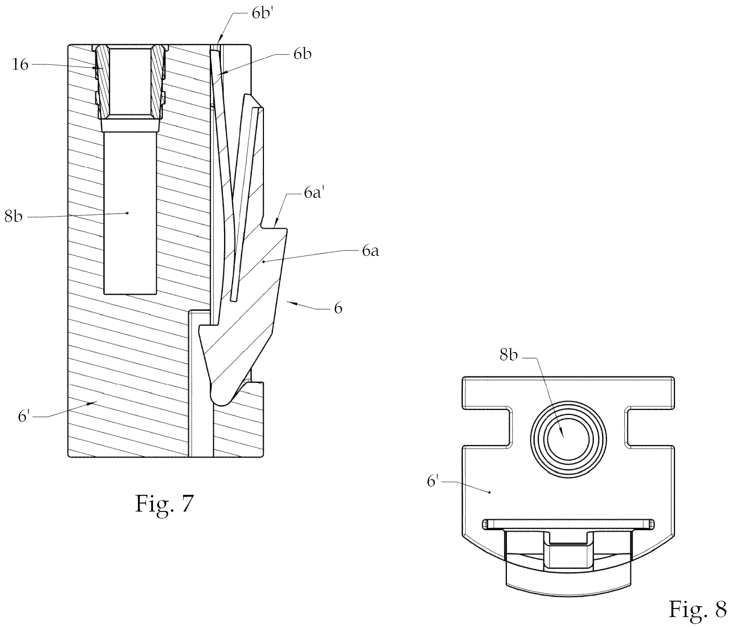

Zu diesem Zweck ist vorgesehen, dass das zumindest eine Klemmelement 6 oder eine das zumindest eine Klemmelement 6 haltende Klemmelementhaltevorrichtung 6' (siehe Figur 2) und das erste Isolierelement 4 jeweils eine Öffnung 8a bzw 8b zur Aufnahme einer das Klemmelement 6 mit dem ersten Isolierelement 4 mechanisch verbindenden Stellschraube 7 aufweisen. Die Stellschraube 7 steht dabei mit der jeweiligen Klemmelementhaltevorrichtung 6' und dem ersten Isolierelement 4 dergestalt in Eingriff, dass das Klemmelement 6 durch Spannen der Stellschraube 7 in Längsrichtung des Leiters 3 in Bezug auf das erste Isolierelement 4 verschoben wird und im eingebauten Zustand gegen die Innenseite 2' der Gehäusewand 2 gespannt wird. Zur Herstellung der Klemmwirkung weisen die Klemmelemente 6 jeweils einen Vorsprung 6a (siehe Fig. 7) auf, durch den eine Klemmfläche 6a' zur Klemmung an einer Innenseite der Gehäusewand 2 der Transformatoranlage ausgebildet ist.

In Figur 2 ist zu erkennen, dass der Leiter 3 Öffnungen aufweist, in die Fixierelemente 9, insbesondere Bolzen, eingesetzt sind, mit denen die Position des Leiters 3 in Bezug auf das erste Isolierelement 4 bzw. ein daran angebrachtes Element fixiert ist.

Zwischen dem ersten Isolierelement 4 und der Außenseite 2" der Gehäusewand 2 ist ein inneres Dichtungselement 10 zur Umschließung eines aufgenommenen Leiters 3 angeordnet.

Figur 2 offenbart zudem, dass an einer Außenseite des ersten Isolierelements 4, die im montierten Zustand von der Außenseite 2" der Gehäusewand 2 absteht, ein zweites Isolierelement 12 angeordnet ist. Das zweite Isolierelement 12 weist eine Öffnung 12a zur formschlüssigen Aufnahme des Leiters 3 auf, wobei zwischen den beiden Isolierelementen 4 und 12 ein äußerer Dichtungsring 13 zum formschlüssigen Umschließen eines aufgenommenen Leiters 3 angeordnet ist. Zur Festklemmung des Dichtungsrings 13 ist das zweite Isolierelement 12 mit dem ersten Isolierelement 4 über eine Schraubverbindung 14 (siehe z.B. Fig. 3 und 4) an dem ersten Isolierelement 4 fixierbar.

In Figur 4 ist eine Nut 11 referenziert, innerhalb der das innere Dichtungselement 10 als Dichtungsring ausgebildet. Zur besseren Klemmung des Dichtungselements 10 ist vorgesehen, dass die Nut 11 entlang ihrer Längserstreckung innerhalb einer Ebene wellenförmig ausgebildet ist.

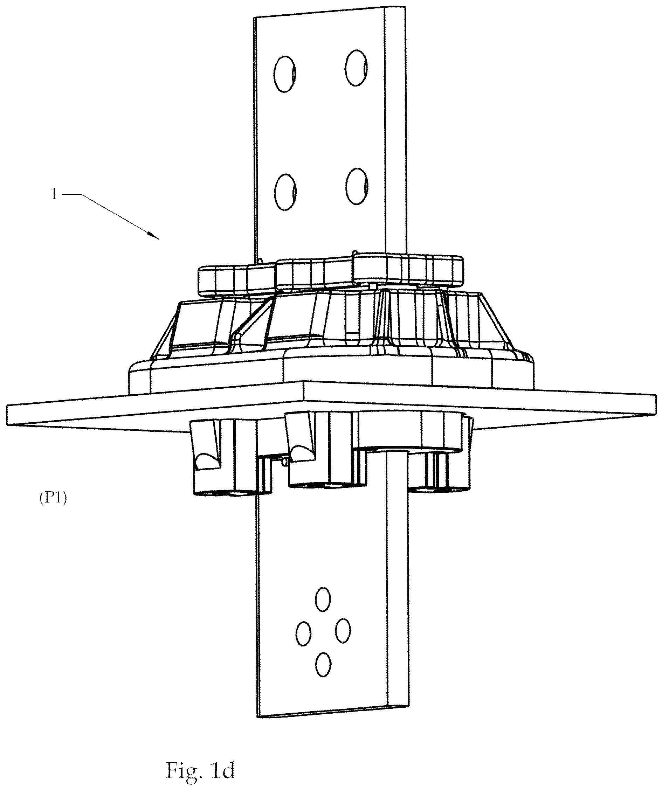

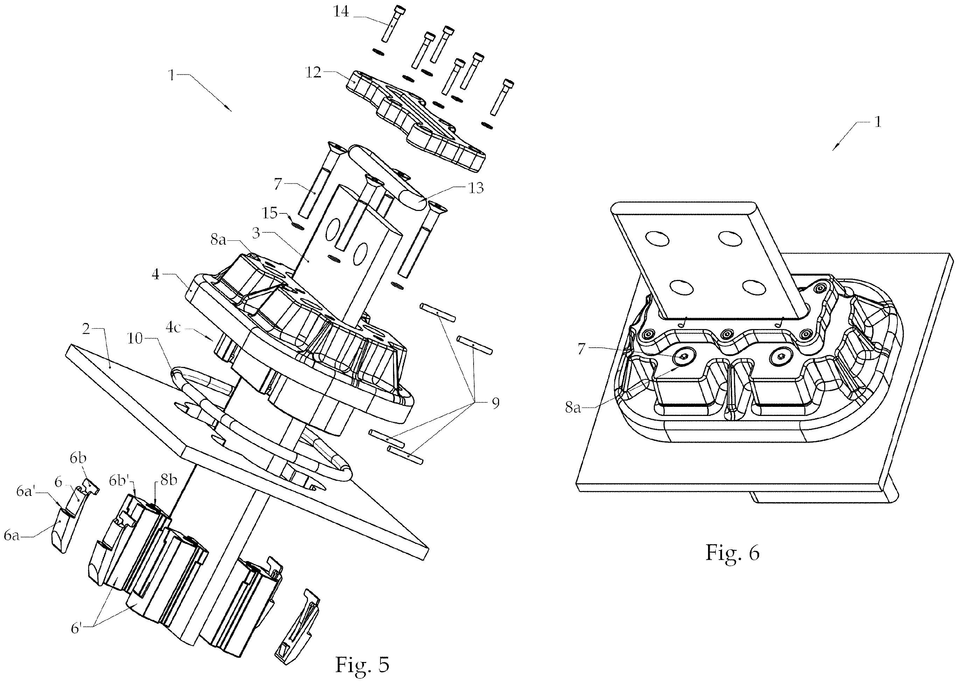

Figur 5 zeigt eine Explosionsdarstellung der Durchführungsanordnung bzw. eines Bausatzes 1 gemäß den Figuren 1 bis 4, wobei die bereits genannten Bauelemente darin mit Bezugszeichen versehen sind. Das zumindest eine erste Isolierelement 4 weist eine sich zur Außenseite des Isolierelements 4 erstreckende korrespondierende Öffnung 8a zur Aufnahme der Schraube 7 auf, wobei in dieser Öffnung die Schrauben 7 umschließende Dichtungsringe 15 angeordnet ist, mit der die Schraubverbindung wasserdicht abdichtbar ist.

Figur 6 zeigt eine perspektivische Darstellung einer Außenseite der Durchführungsanordnung bzw. eines Bausatzes 1 gemäß den Figuren 1 bis 5 im montierten Zustand.

Figur 7 zeigt ein Klemmelement 6 und eine zugehörige Klemmelementhaltevorrichtung 6' gemäß Detail A der Fig. 2. Darin ist erkennbar, dass das zumindest eine Klemmelement 6 federnd an dem zumindest einen ersten Isolierelement 4 angeordnet ist, wobei die Federkraft dergestalt gewählt ist, dass das Klemmelement 6 durch die Federkraft von der zweiten Position P2 in die erste Position P1 gedrückt wird. Das Klemmelement 6 ist dergestalt angeordnet, dass es durch Einwirken einer Kraftkomponente, die in Richtung der Durchführungsöffnung 4a des ersten Isolierelements 4 (in dieser Figur nicht dargestellt) wirkt, in die zweite Position P2 wechseln kann, wobei das Klemmelement 6 in der zweiten Position P2 an die Umfangsfläche des zumindest einen ersten Isolierelements 4 herangerückt ist, insbesondere darin aufgenommen ist. Die Durchführungsöffnung 4a des ersten Isolierelements 4 ist vorzugsweise zur formschlüssigen Aufnahme eines durch das erste Isolierelement 4 erstreckenden Abschnitts des elektrischen Leiters 3 ausgebildet. Das Klemmelement 6 ist in einer Klemmelementhaltevorrichtung 6' gehalten. Die Klemmelementhaltevorrichtung 6' ist an dem ersten Isolierelement 4 in Längsrichtung des Leiters 3 verschiebbar geführt (siehe z.B. Fig. 2 bis 5), jede Klemmelementhaltevorrichtung 6'. In jeder Klemmelementhaltevorrichtung 6' eine Öffnung 8b zur Aufnahme der jeweiligen Stellschraube 7 vorgesehen, in der ein Metallgewinde 16 zum Eingriff in einen Gewindeabschnitts der zugeordneten Stellschraube 7 angeordnet ist.

In Figur 5 ist erkennbar, dass das Klemmelement 6 im Wesentlichen plättchenförmig ausgebildet ist, wobei das erste Isolierelement 4 entlang seines Umfanges jeweils eine Vertiefung 4c zur Aufnahme des jeweiligen Klemmelements 6 bzw. der Klemmelementhaltevorrichtung 6' aufweist. Figur 5 und Figur 7 zeigen deutlich, dass das Klemmelement 6 eine im montierten Zustand zumindest teilweise in Richtung des zumindest einen Isolierelements 4 abstehende, an dem Isolierelement 4 abstützende Zunge 6b zur Ausbildung einer das Klemmelement 6 in die erste Position drückenden Federkraft aufweist. Die Zunge 6b ist zumindest abschnittsweise verbreitert und greift in eine korrespondierende Führung 6'b ein, die in der Klemmelementhaltevorrichtung 6' ausgebildet ist. Die Führung 6'b führt die Zunge 6b entlang der Längsachse des Isolierelements 4, wobei das Klemmelement 6 zudem an seiner von dem Umfang des Isolierelements 4 abgewandten, der Zunge 6b gegenüberliegenden Außenseite einen Vorsprung 6a aufweist, durch den die Klemmfläche 6a' zur Klemmung an der Innenseite 2' der Gehäusewand 2 der Transformatoranlage ausgebildet ist. Die Führung 6'b und die Zunge 6b sind dabei dergestalt ausgebildet, dass die Zunge 6b des Klemmelements 6 von oben in die Führung 6'b eingesetzt werden kann und innerhalb der Führung 6'b gegen ein Herausfallen gesichert ist. auf diese Weise kann verhindert werden, dass das Klemmelement 6 aus der Klemmelementhaltevorrichtung 6' während des Einsetzvorganges z.B. aufgrund Schiebebewegungen herausfällt.

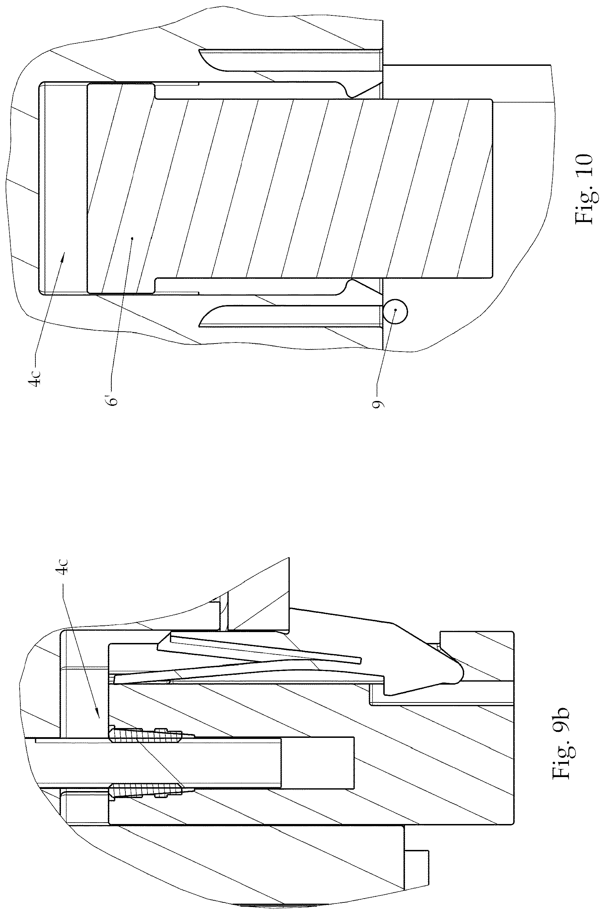

Figur 8 zeigt eine Draufsicht auf das Klemmelement 6 und die Klemmelementhaltevorrichtung 6' gemäß Figur 7. Fig. 9a zeigt das Klemmelement 6 und die zugehörige Klemmelementhaltevorrichtung während eines Montagevorganges im eingeklappten Zustand. Fig. 9b zeigt das Klemmelement 6 und die zugehörige Klemmelementhaltevorrichtung 6' gemäß Detail A der Fig. 2 im ausgeklappten montierten Zustand.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigte Ausführungsform beschränkt. Auch können einzelne Aspekte der Erfindung bzw. der Ausführungsform aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Bausatz (1) für eine Durchführungsanordnung zur elektrischen Anbindung einer Transformatoranlage durch eine Öffnung (2a) in einer Gehäusewand (2) der Transformatoranlage, wobei der Bausatz (1) umfasst
- zumindest ein in die Öffnung (2a) der Gehäusewand (2) einsetzbares erstes Isolierelement (4), das eine Durchführungsöffnung (4a) zur Aufnahme eines länglich ausgebildeten Leiters (3) aufweist, wobei die Durchführungsöffnung (4a) des ersten Isolierelements (4) zur Führung des Leiters (3) von einer Außenseite (2") der Gehäusewand (2) hin zu einer der Außenseite (2") gegenüberliegenden Innenseite (2') der Gehäusewand (2) eingerichtet ist und ferner dazu eingerichtet ist, den Leiter (3) entlang der Führung innerhalb der Durchführungsöffnung (4a) gegenüber der Gehäusewand (2) zu isolieren, wobei das Isolierelement (4) eine Anschlagsfläche (4') aufweist oder mit einem solchen Anschlagsfläche verbunden ist, durch die eine Einsetzbewegung des Isolierelement (4) in Richtung der Öffnung (2a) der Gehäusewand (2) begrenzbar ist, indem die Anschlagsfläche (4') auf der Außenseite (2") des Gehäusewand (2) abstützbar ist,
- zumindest ein Klemmelement (6), das an dem ersten Isolierelement (4) in Längsrichtung eines aufgenommenen Leiters (3) verschiebbar geführt ist,
wobei das zumindest eine Klemmelement (6) von einer von dem Umfang des ersten Isolierelements (4) abstehenden ersten Position (P1) in eine an den Umfang des ersten Isolierelements (4) herangerückte zweite Position (P2) bringbar ist, wobei das zumindest eine Klemmelement (6) dergestalt an dem ersten Isolierelement (4) angeordnet ist, dass es in der herangerückten zweiten Position (P2) durch die Öffnung (2a) der Gehäusewand (2) hindurch bewegbar ist und dass es in der ersten Position (P1) im eingebauten Zustand der Durchführungsanordnung eine Verschiebung des ersten Isolierelements (4) in Richtung der Außenseite (2") der Gehäusewand (2) durch Abstützung an der Innenseite (2') der Gehäusewand (2) begrenzt,
**dadurch gekennzeichnet, dass**
das zumindest eine Klemmelement (6) oder eine das zumindest eine Klemmelement (6) haltende Klemmelementhaltevorrichtung (6') und das erste Isolierelement (4) jeweils eine Öffnung (8a, 8b) zur Aufnahme einer das Klemmelement (6) mit dem ersten Isolierelement (4) mechanisch verbindenden Stellschraube (7) aufweisen, wobei die Stellschraube (7) mit dem zumindest einen Klemmelement (6) und dem ersten Isolierelement (4) dergestalt in Eingriff steht, dass das Klemmelement (6) durch Spannen der Stellschraube (7) in Längsrichtung eines aufgenommenen Leiters (3) in Bezug auf das erste Isolierelement (4) in Richtung der Innenseite der Gehäusewand (2) verschiebbar und dadurch in der ersten Position (P1) im eingebauten Zustand gegen die Innenseite (2') der Gehäusewand (2) gespannt ist.

2. Bausatz nach Anspruch 1, wobei der Bausatz (1) den länglich ausgebildeten elektrischen Leiter (3) umfasst, wobei entlang der Längserstreckung des Leiters (3) zumindest ein im montierten Zustand in Bezug auf die Gehäusewand (2) innenliegender erster Abschnitt (3') sowie ein im montierten Zustand in Bezug auf die Gehäusewand (2) außenliegender zweiter Abschnitt (3") ausgebildet ist.

3. Bausatz (1) nach Anspruch 2, wobei der Leiter (3) als Flachleiter ausgebildet ist.

4. Bausatz (1) nach Anspruch 2 oder 3, wobei der Leiter (3) Öffnungen aufweist, in die Fixierelemente (9), insbesondere Bolzen, eingesetzt sind, mit denen die Position des Leiters (3) in Bezug auf das erste Isolierelement (4) fixiert ist.

5. Bausatz (1) nach einem der vorhergehenden Ansprüche, wobei das erste Isolierelement aus einem ausgehärteten Epoxidharzmaterial besteht.

6. Bausatz (1) nach einem der vorhergehenden Ansprüche, wobei zwischen dem ersten Isolierelement (4) und der Außenseite (2") der Gehäusewand (2) ein inneres Dichtungselement (10) zur Umschließung eines aufgenommenen Leiters (3) angeordnet ist.

7. Bausatz (1) nach Anspruch 6, wobei das innere Dichtungselement (10) als Dichtungsring ausgebildet ist, wobei das erste Isolierelement (4) eine Nut (11) zur Umschließung eines aufgenommenen Leiters (3) aufweist, innerhalb der das innere Dichtungselement (10) teilweise aufnehmbar ist, wobei die Nut (11) entlang ihrer Längserstreckung zur Klemmung des inneren Dichtungselements (10) wellenförmig ausgebildet ist.

8. Bausatz (1) nach einem der vorhergehenden Ansprüche, wobei an einer Außenseite des ersten Isolierelements (4), die im montierten Zustand von der Außenseite (2") der Gehäusewand (2) absteht, ein zweites Isolierelement (12) angeordnet ist, wobei das zweite Isolierelement (12) eine Öffnung (12a) zur formschlüssigen Aufnahme des Leiters (3) aufweist, wobei zwischen den beiden Isolierelementen (4, 12) ein äußerer Dichtungsring (13) zum formschlüssigen Umschließen eines aufgenommenen Leiters (3) angeordnet ist, wobei das zweite Isolierelement (12) mit dem ersten Isolierelement (4) über eine Schraubverbindung (14) an dem ersten Isolierelement (4) fixierbar ist und der zwischenliegende äußere Dichtungsring (13) zwischen den Isolierelementen (4, 12) und dem Leiter (3) zur Abdichtung der Öffnung (4a) des ersten Isolierelements (4) klemmbar ist.

9. Bausatz (1) nach einem der vorhergehenden Ansprüche, wobei der Bausatz (1) genau zwei Isolierelemente aufweist, anhand derer der Leiter (3) führbar ist, nämlich das erste Isolierelement (4) und das zweite Isolierelement (12).

10. Bausatz (1) nach einem der vorhergehenden Ansprüche, wobei zumindest zwei, drei, vier oder mehr Klemmelemente (6) an dem zumindest einen ersten Isolierelement (4) angeordnet sind, wobei die Klemmelemente (6) vorzugsweise gleichmäßig entlang des Umfangs des ersten Isolierelements (4), bevorzugt auf gleicher Höhe, angeordnet sind.

11. Bausatz (1) nach einem der vorhergehenden Ansprüche, wobei das zumindest eine erste Isolierelement (4) eine sich zur Außenseite des Isolierelements (4) erstreckende korrespondierende Öffnung (8a) zur Aufnahme der Schraube (7) aufweist, wobei in dieser Öffnung ein Dichtung (15) angeordnet ist, mit der die Verbindung mittels der Schraube (7) wasserdicht abdichtbar ist.

12. Bausatz (1) nach einem der vorhergehenden Ansprüche, wobei das zumindest eine Klemmelement (6) federnd an dem zumindest einen ersten Isolierelement (4) angeordnet ist, wobei die Federkraft dergestalt gewählt ist, dass das Klemmelement (6) durch die Federkraft von der zweiten Position (P2) in die erste Position (P1) gedrückt wird, wobei das zumindest eine Klemmelement (6) dergestalt angeordnet ist, dass es durch Einwirken einer Kraftkomponente, die in Richtung der Durchführungsöffnung (4a) des zumindest einen ersten Isolierelements (4) wirkt, in die zweite Position (P2) wechseln kann, wobei das zumindest eine Klemmelement (6) in der zweiten Position (P2) an die Umfangsfläche des zumindest einen ersten Isolierelements (4) herangerückt ist, insbesondere darin aufgenommen ist, und wobei die Durchführungsöffnung (4a) des zumindest einen ersten Isolierelements (4) vorzugsweise zur formschlüssigen Aufnahme eines durch das erste Isolierelement (4) erstreckenden Abschnitts des elektrischen Leiters (3) ausgebildet ist.

13. Bausatz (1) nach einem der vorhergehenden Ansprüche, wobei jedes Klemmelement (6) in je einer Klemmelementhaltevorrichtung (6') gehalten ist, wobei jede Klemmelementhaltevorrichtung (6') an dem ersten Isolierelement (4) in Längsrichtung des Leiters (3) verschiebbar geführt ist, wobei jede Klemmelementhaltevorrichtung (6') insbesondere aus Polyamidmaterial, bevorzugt glasfaserverstärktes Polyamid 6 oder glasfaserverstärktes Polyamid 6.6, besteht, wobei in jeder Klemmelementhaltevorrichtung (6') eine Öffnung (8b) zur Aufnahme der jeweiligen Stellschraube (7) vorgesehen ist, in der ein Metallgewinde (16) zum Eingriff in einen Gewindeabschnitts der zugeordneten Stellschraube (7) angeordnet ist.

14. Bausatz (1) nach den Ansprüchen 12 und 13, wobei das zumindest eine Klemmelement (6) im Wesentlichen plättchenförmig ausgebildet ist, wobei das zumindest eine erste Isolierelement (4) entlang seines Umfanges jeweils eine Vertiefung (4c) zur Aufnahme des jeweiligen Klemmelements (6) oder der Klemmelementhaltevorrichtung (6') aufweist, wobei das zumindest eine Klemmelement (6) eine im montierten Zustand zumindest teilweise in Richtung des zumindest einen ersten Isolierelements (4) abstehende, an dem ersten Isolierelement (4) abstützende Zunge (6b) zur Ausbildung einer das Klemmelement (6) in die erste Position drückenden Federkraft aufweist, wobei die Zunge (6b) zumindest abschnittsweise verbreitert ist und in eine korrespondierende Führung (6'b) eingreift, die im ersten Isolierelement (4) oder in der Klemmelementhaltevorrichtung (6') ausgebildet ist und die Zunge (6b) entlang der Längsachse des ersten Isolierelements (4) führt, wobei das zumindest eine Klemmelement (6) zudem an seiner von dem Umfang des ersten Isolierelements (4) abgewandten, der Zunge (6b) gegenüberliegenden Außenseite einen Vorsprung (6a) aufweist, durch den eine Klemmfläche (6a') zur Klemmung an einer Innenseite (2') der Gehäusewand (2) der Transformatoranlage ausgebildet ist.

15. Durchführungsanordnung, zusammengesetzt aus einem Bausatz (1) nach einem der vorhergehenden Ansprüche.

## Claims

1. Kit (1) for a bushing arrangement for the electrical connection of a transformer installation through an opening (2a) in a housing wall (2) of the transformer installation, the kit (1) comprising
- at least one first insulating element (4) which can be inserted into the opening (2a) in the housing wall (2) and has a lead-through opening (4a) for receiving an elongated conductor (3), the lead-through opening (4a) of the first insulating element (4) being arranged for guiding the conductor (3) from an outer side (2") of the housing wall (2) to an inner side (2') of the housing wall (2) opposite the outer side (2"), and being further arranged to insulating the conductor (3) along the guide inside the feed-through opening (4a) with respect to the housing wall (2), the insulating element (4) having a stop surface (4') or being connected to such a stop surface, by means of which an insertion movement of the insulating element (4) in the direction of the opening (2a) of the housing wall (2) can be limited, in that the stop surface (4') can be supported on the outer side (2") of the housing wall (2),
- at least one clamping element (6), which is guided on the first insulating element (4) so as to be displaceable in the longitudinal direction of a received conductor (3),
wherein the at least one clamping element (6) can be brought from a first position (P1) projecting from the periphery of the first insulating element (4) into a second position (P2) approaching the periphery of the first insulating element (4), wherein the at least one clamping element (6) is arranged on the first insulating element (4) in such a way that, in the second position (P2), it can be brought closer to the periphery of the first insulating element (4), that it can be moved through the opening (2a) of the housing wall (2) in the moved-up second position (P2) and that it limits a displacement of the first insulating element (4) in the first position (P1) in the installed state of the bushing arrangement in the direction of the outside (2") of the housing wall (2) by support on the inside (2') of the housing wall (2),
**characterized in that**
the at least one clamping element (6) or a clamping element holding device (6') holding the at least one clamping element (6) and the first insulating element (4) each have an opening (8a, 8b) for receiving a set screw (7) mechanically connecting the clamping element (6) to the first insulating element (4), the set screw (7) engaging with the at least one clamping element (6) and the first insulating element (4) in such a manner that the clamping element (6) is displaceable in the longitudinal direction of a received conductor (3) with respect to the first insulating element (4) in the direction of the inner side of the housing wall (2) by tensioning the set screw (7) and is thereby tensioned in the first position (P1) in the installed state against the inner side (2') of the housing wall (2).

2. Kit according to claim 1, wherein the assembly kit (1) comprises the elongated electrical conductor (3), wherein along the longitudinal extension of the conductor (3) at least a first section (3'), which in the assembled state is located on the inside with respect to the housing wall (2), and a second section (3"), which in the assembled state is located on the outside with respect to the housing wall (2), are formed.

3. Kit (1) according to claim 2, wherein the conductor (3) is formed as a flat conductor.

4. Kit (1) according to claim 2 or 3, wherein the conductor (3) has openings into which fixing elements (9), in particular bolts, are inserted, with which the position of the conductor (3) is fixed in relation to the first insulating element (4).

5. Kit (1) according to any one of the preceding claims, wherein the first insulating element is made of a cured epoxy resin material.

6. Kit (1) according to any one of the preceding claims, wherein an inner sealing element (10) is arranged between the first insulating element (4) and the outer side (2") of the housing wall (2) for enclosing a received conductor (3).

7. Kit (1) according to claim 6, wherein the inner sealing element (10) is formed as a sealing ring, wherein the first insulating element (4) has a groove (11) for enclosing a received conductor (3), within which the inner sealing element (10) is partially receivable, wherein the groove (11) is corrugated along its longitudinal extension for clamping the inner sealing element (10).

8. Kit (1) according to one of the preceding claims, wherein a second insulating element (12) is arranged on an outer side of the first insulating element (4), which projects from the outer side (2") of the housing wall (2) in the assembled state, wherein the second insulating element (12) has an opening (12a) for receiving the conductor (3) in a form-fitting manner, wherein between the two insulating elements (4, 12), an outer sealing ring (13) being arranged between the two insulating elements (4, 12) for positively enclosing a received conductor (3), the second insulating element (12) being fixable to the first insulating element (4) by means of a screw connection (14), and the interposed outer sealing ring (13) being clampable between the insulating elements (4, 12) and the conductor (3) for sealing the opening (4a) of the first insulating element (4).

9. Kit (1) according to one of the preceding claims, wherein the kit (1) comprises exactly two insulating elements by means of which the conductor (3) can be guided, namely the first insulating element (4) and the second insulating element (12).

10. Kit (1) according to one of the preceding claims, wherein at least two, three, four or more clamping elements (6) are arranged on the at least one first insulating element (4), wherein the clamping elements (6) are preferably arranged uniformly along the circumference of the first insulating element (4), preferably at the same height.

11. Kit (1) according to one of the preceding claims, wherein the at least one first insulating element (4) has a corresponding opening (8a) extending to the outside of the insulating element (4) for receiving the screw (7), wherein a seal (15) is arranged in this opening, with which the connection by means of the screw (7) can be sealed in a watertight manner.

12. Kit (1) according to one of the preceding claims, wherein the at least one clamping element (6) is resiliently arranged on the at least one first insulating element (4), wherein the spring force is selected such that the clamping element (6) is pressed by the spring force from the second position (P2) into the first position (P1), wherein the at least one clamping element (6) is arranged in such a way that it can change from the first position (P1) to the second position (P2) by the action of a force component acting in the direction of the feed-through opening (4a) of the at least one first insulating element (4), into the second position (P2), wherein the at least one clamping element (6) in the second position (P2) is moved towards the circumferential surface of the at least one first insulating element (4), in particular is accommodated therein, and wherein the lead-through opening (4a) of the at least one first insulating element (4) is preferably designed for the form-fitting accommodation of a section of the electrical conductor (3) extending through the first insulating element (4).

13. Kit (1) according to one of the preceding claims, wherein each clamping element (6) is held in a respective clamping element holding device (6'), wherein each clamping element holding device (6') is guided on the first insulating element (4) so as to be displaceable in the longitudinal direction of the conductor (3), wherein each clamping element holding device (6') is in particular made of polyamide material, preferably glass-fiber-reinforced polyamide 6 or glass-fiber-reinforced polyamide 6.6, wherein an opening (8b) for receiving the respective set screw (7) is provided in each clamping element holding device (6'), in which opening a metal thread (16) is arranged for engagement in a threaded portion of the associated set screw (7).

14. Kit (1) according to claims 12 and 13, wherein the at least one clamping element (6) is substantially plate-shaped, wherein the at least one first insulating element (4) has along its circumference a respective recess (4c) for receiving the respective clamping element (6) or the clamping element holding device (6'), wherein the at least one clamping element (6) has a tongue (6b) which, in the assembled state, projects at least partially in the direction of the at least one first insulating element (4) and is supported on the first insulating element (4) in order to form a spring force which presses the clamping element (6) into the first position, wherein the tongue (6b) is widened at least in sections and engages in a corresponding guide (6'b) formed in the first insulating element (4) or in the clamping element holding device (6') and guides the tongue (6b) along the longitudinal axis of the first insulating element (4), the at least one clamping element (6) furthermore having, on its outer side facing away from the circumference of the first insulating element (4) and opposite the tongue (6b), a projection (6a) by means of which a clamping surface (6a') is formed for clamping on an inner side (2') of the housing wall (2) of the transformer installation.

15. Bushing arrangement composed of a kit (1) according to any one of the preceding claims.

## Revendications

1. Kit (1) pour un dispositif de traversée pour le raccordement électrique d'une installation de transformateur à travers une ouverture (2a) dans une paroi de boîtier (2) de l'installation de transformateur, le kit (1) comprenant
- au moins un premier élément isolant (4) qui peut être inséré dans l'ouverture (2a) de la paroi de logement (2) et qui a une ouverture de passage (4a) pour recevoir un conducteur allongé (3), l'ouverture de passage (4a) du premier élément isolant (4) étant disposée pour guider le conducteur (3) d'un côté extérieur (2") de la paroi de logement (2) à un côté intérieur (2') de la paroi de logement (2) opposé au côté extérieur (2") et étant en outre disposée pour isoler le conducteur (3) le long du guide à l'intérieur de l'ouverture de passage (4a) par rapport à la paroi du boîtier (2), l'élément isolant (4) présentant une surface de butée (4') ou étant relié à une telle surface de butée, au moyen de laquelle un mouvement d'insertion de l'élément isolant (4) dans la direction de l'ouverture (2a) de la paroi du boîtier (2) peut être limité, en ce que la surface de butée (4') peut être supportée sur le côté extérieur (2") de la paroi du boîtier (2),
- au moins un élément de serrage (6) qui est guidé sur le premier élément isolant (4) de manière à pouvoir être déplacé dans la direction longitudinale d'un conducteur (3) reçu,
dans lequel le au moins un élément de serrage (6) peut être amené d'une première position (P1) faisant saillie de la périphérie du premier élément isolant (4) dans une deuxième position (P2) déplacée vers la périphérie du premier élément isolant (4), dans lequel le au moins un élément de serrage (6) est disposé sur le premier élément isolant (4) de telle sorte que, dans la deuxième position (P2) déplacée vers la périphérie du premier élément isolant (4), il peut être amené dans la deuxième position (P2) déplacée vers la périphérie du premier élément isolant (4), en ce qu'il peut être déplacé à travers l'ouverture (2a) de la paroi de boîtier (2) dans la deuxième position déplacée (P2) et en ce qu'il limite un déplacement du premier élément isolant (4) dans la première position (P1) à l'état monté de l'agencement de douilles en direction de la face extérieure (2") de la paroi de boîtier (2) par appui contre la face intérieure (2') de la paroi de boîtier (2),
**caractérisé en ce que**
l'au moins un élément de serrage (6) ou un dispositif de maintien d'élément de serrage (6') maintenant l'au moins un élément de serrage (6) et le premier élément isolant (4) présentent chacun une ouverture (8a, 8b) pour recevoir une vis de réglage (7) reliant mécaniquement l'élément de serrage (6) au premier élément isolant (4), la vis de réglage (7) s'engageant avec l'au moins un élément de serrage (6) et le premier élément isolant (4) de telle sorte que que l'élément de serrage (6) peut être déplacé dans la direction longitudinale d'un conducteur (3) reçu par rapport au premier élément isolant (4) en direction de la face intérieure de la paroi de boîtier (2) en serrant la vis de réglage (7) et est ainsi serré dans la première position (P1) à l'état monté contre la face intérieure (2') de la paroi de boîtier (2).

2. Kit selon la revendication 1, dans lequel le kit (1) comprend le conducteur électrique allongé (3), dans lequel le long de l'extension longitudinale du conducteur (3) au moins une première section (3'), qui dans l'état monté est située à l'intérieur par rapport à la paroi du logement (2), et une deuxième section (3"), qui dans l'état monté est située à l'extérieur par rapport à la paroi du logement (2), sont formées.

3. Kit (1) selon la revendication 2, dans lequel le conducteur (3) est formé comme un conducteur plat.

4. Kit (1) selon la revendication 2 ou 3, dans lequel le conducteur (3) présente des ouvertures dans lesquelles sont insérés des éléments de fixation (9), notamment des boulons, avec lesquels la position du conducteur (3) est fixée par rapport au premier élément isolant (4).

5. Kit (1) selon l'une quelconque des revendications précédentes, dans lequel le premier élément isolant est constitué d'un matériau en résine époxy durcie.

6. Kit (1) selon l'une quelconque des revendications précédentes, dans lequel un élément d'étanchéité intérieur (10) destiné à enfermer un conducteur logé (3) est disposé entre le premier élément isolant (4) et le côté extérieur (2") de la paroi du boîtier (2).

7. Kit (1) selon la revendication 6, dans lequel l'élément d'étanchéité interne (10) est formé comme une bague d'étanchéité, dans lequel le premier élément isolant (4) a une rainure (11) pour entourer un conducteur reçu (3), rainure dans laquelle l'élément d'étanchéité interne (10) peut être partiellement reçu, dans lequel la rainure (11) est ondulée le long de son extension longitudinale pour serrer l'élément d'étanchéité interne (10).

8. Kit (1) selon l'une des revendications précédentes, dans lequel un deuxième élément isolant (12) est disposé sur un côté extérieur du premier élément isolant (4), qui fait saillie du côté extérieur (2") de la paroi du boîtier (2) à l'état assemblé, dans lequel le deuxième élément isolant (12) présente une ouverture (12a) pour recevoir le conducteur (3) par engagement positif, dans lequel entre les deux éléments isolants (4, 12) pour entourer de manière positive un conducteur (3) reçu, le deuxième élément isolant (12) pouvant être fixé au premier élément isolant (4) au moyen d'un raccord à vis (14) et la bague d'étanchéité extérieure intermédiaire (13) pouvant être serrée entre les éléments isolants (4, 12) et le conducteur (3) pour fermer l'ouverture (4a) du premier élément isolant (4).

9. Kit (1) selon l'une des revendications précédentes, dans lequel le kit (1) comprend exactement deux éléments isolants au moyen desquels le conducteur (3) peut être guidé, à savoir le premier élément isolant (4) et le deuxième élément isolant (12).

10. Kit (1) selon l'une des revendications précédentes, dans lequel au moins deux, trois, quatre ou plusieurs éléments de serrage (6) sont disposés sur le au moins un premier élément isolant (4), les éléments de serrage (6) étant de préférence disposés uniformément sur la circonférence du premier élément isolant (4), de préférence à la même hauteur.

11. Kit (1) selon l'une des revendications précédentes, dans lequel le au moins un premier élément isolant (4) présente une ouverture correspondante (8a) s'étendant vers l'extérieur de l'élément isolant (4) pour recevoir la vis (7), dans lequel un joint (15) est disposé dans cette ouverture, avec lequel la connexion au moyen de la vis (7) peut être fermée de manière étanche à l'eau.

12. Kit (1) selon l'une des revendications précédentes, dans lequel le au moins un élément de serrage (6) est disposé de manière élastique sur le au moins un premier élément isolant (4), dans lequel la force de ressort est choisie de telle sorte que l'élément de serrage (6) est pressé par la force de ressort de la deuxième position (P2) dans la première position (P1), dans lequel le au moins un élément de serrage (6) est disposé de telle sorte qu'il peut passer dans la deuxième position (P2) sous l'action d'une composante de force agissant en direction de l'ouverture de passage (4a) du au moins un premier élément isolant (4), dans la deuxième position (P2), l'au moins un élément de serrage (6) étant déplacé dans la deuxième position (P2) vers la surface périphérique de l'au moins un premier élément isolant (4), en particulier étant logé dans celle-ci, et l'ouverture de passage (4a) de l'au moins un premier élément isolant (4) étant de préférence conçue pour recevoir par engagement positif une section du conducteur électrique (3) s'étendant à travers le premier élément isolant (4).

13. Kit (1) selon l'une des revendications précédentes, dans lequel chaque élément de serrage (6) est maintenu dans un dispositif de maintien d'élément de serrage (6') respectif, dans lequel chaque dispositif de maintien d'élément de serrage (6') est guidé sur le premier élément isolant (4) de manière à pouvoir être déplacé dans la direction longitudinale du conducteur (3), dans lequel chaque dispositif de maintien d'élément de serrage (6') est notamment en matériau polyamide, de préférence en polyamide 6 renforcé de fibres de verre ou en polyamide 6 renforcé de fibres de verre. 6, dans lequel une ouverture (8b) pour recevoir la vis de réglage respective (7) est prévue dans chaque dispositif de maintien d'élément de serrage (6'), ouverture dans laquelle un filetage métallique (16) est disposé pour s'engager dans une partie filetée de la vis de réglage associée (7).

14. Kit (1) selon les revendications 12 et 13, dans lequel l'au moins un élément de serrage (6) est sensiblement en forme de plaque, dans lequel l'au moins un premier élément isolant (4) présente le long de sa périphérie un évidement respectif (4c) pour recevoir l'élément de serrage respectif (6) ou le dispositif de maintien d'élément de serrage (6'), dans lequel le au moins un élément de serrage (6) présente une languette (6b) qui, à l'état monté, fait saillie au moins partiellement en direction du au moins un premier élément isolant (4) et s'appuie sur le premier élément isolant (4) afin de former une force de ressort qui pousse l'élément de serrage (6) dans la première position, dans lequel la languette (6b) est élargie au moins par sections et s'engage dans un guide correspondant (6'b) qui est formé dans le premier élément isolant (4) ou dans le dispositif de maintien de l'élément de serrage (6') et guide la languette (6b) le long de l'axe longitudinal du premier élément isolant (4), l'au moins un élément de serrage (6) présente en outre, sur son côté extérieur opposé à la circonférence du premier élément isolant (4) et à l'opposé de la languette (6b), une saillie (6a) au moyen de laquelle une surface de serrage (6a') est formée pour le serrage sur un côté intérieur (2') de la paroi de boîtier (2) de l'installation de transformateur.

15. Agencement de douilles composé d'un kit (1) selon l'une quelconque des revendications précédentes.
